# EUROPEAN PATENT APPLICATION

(11) **EP 3 569 047 A1**
(43) Date of publication of application: **20.11.2019**
(21) Application number: 18172114.3
(22) Date of filing: 14.05.2018
(51) Int. Cl.: A01D 34/416

(54) **CUTTING HEAD ASSEMBLY**

(71) Applicant: TTI (Macao Commercial Offshore) Limited, Macao (MO)
(72) Inventor: CHUNG, Kon For, Kwai Chung, Hong Kong (HK)
(74) Representative: Stevenson-Hill, Jack Patrick

(57) **Abstract**

A cutting head assembly (100, 200, 300), a trimmer head and a power tool including such cutting head assembly (100, 200, 300). The cutting head assembly (100, 200, 300) comprises a spool (140, 240, 340) and an enclosure (180, 280, 380) combined to define a spool cavity arranged to accommodate a trimmer line (120, 220) wound on the spool (140, 240, 340), characterized in that the trimmer line (120, 220) is arranged to form a single layer of winding when being retracted within the enclosure (180, 280, 380).

## Description

### FIELD OF INVENTION

The present invention relates to a cutting head assembly and a power tool including such cutting assembly, and particularly, although not exclusively, to an outdoor gardening tool that uses trimmer line, and a trimmer head including improved mechanism for providing enhanced release of the trimmer line.

### BACKGROUND OF INVENTION

Outdoor power tools are commonly used in garden/grounds maintenance and commercial landscaping. Outdoor power tools such as trimmers, edgers and brushcutters, which can be generally referred to as string trimmers, often employ trimmer lines which can be effective at cutting when rotated at high speeds. Enhanced trimmer line release can improve the efficiency of string trimmers. String trimmers with higher efficiency are desired.

### SUMMARY OF INVENTION

In accordance with a first aspect of the present invention, there is provided a cutting head assembly comprising a spool and an enclosure combined to define a spool cavity arranged to accommodate a trimmer line would on the spool, the trimmer line is arranged to form a single layer of winding when being retracted within the enclosure.

In an embodiment of the first aspect, during operation of the cutting head assembly, a portion of the trimmer line extends from an outer surface of the enclosure, thereby defining a cutting diameter larger than a cutting head diameter defined by the circumference of the enclosure.

In an embodiment of the first aspect, a ratio of the cutting diameter to the cutting head diameter is larger than 0.37.

In an embodiment of the first aspect, the cutting diameter is larger than or equal to 330 mm.

In an embodiment of the first aspect, the cutting head diameter is larger than or equal to 127 millimeters (mm).

In an embodiment of the first aspect, the enclosure includes a spool portion defining the outer surface and a height of the spool portion, wherein the spool is housed substantially within the spool portion.

In an embodiment of the first aspect, a ratio of the cutting head diameter to the height of the spool portion is larger than or equal to 4.98.

In an embodiment of the first aspect, the height of the portion is smaller than or equal to 25.5 mm.

In an embodiment of the first aspect, two portions of the trimmer line extends from the outer surface of the enclosure at opposite positions along the outer surface.

In accordance with a second aspect of the present invention, there is provided a power tool comprising a cutting head assembly in accordance with the first aspect, in which the cutting head assembly comprises a spool and an enclosure combined to define a spool cavity arranged to accommodate a trimmer line wound on the spool, the trimmer line is arranged to form a single layer of winding when being retracted within the enclosure, and a motor arranged to drive the cutting head assembly.

In an embodiment of the second aspect, the power tool includes a string trimmer and/or a string edger.

In an embodiment of the second aspect, the power tool motor is powered by electricity.

In accordance with a third aspect of the present invention, there is provided a string trimmer head comprising a cutting head assembly in accordance with the first aspect and the trimmer line wound on the spool.

The cutting head assembly according to the present invention reduces noise and power loss, altering cutting diameter to cutting head diameter ratio. In addition, the trimmer line arranged in a single layer of winding may allow enhanced release of the trimmer line from the cutting head assembly during operation of the string trimmer mounted with such string trimmer head.

### BRIEF DESCRIPTION OF FIGURES

The foregoing and further features of the present invention will be apparent from the following description of preferred embodiments which are provided by way of example only in connection with the accompanying figures, of which:
Fig. 1A is a side view of a cutting head assembly in accordance with an example embodiment of the present invention;
Fig. 1B is a cross-sectional view of the cutting head assembly in Fig. 1A;
Fig. 2A is a side view of a cutting head assembly in accordance with an alternative example embodiment of the present invention;
Fig. 2B is a cross-sectional view of the cutting head assembly of Fig. 2A;
Fig. 3A is a front view of a cutting head assembly in accordance with an example embodiment of the present invention;
Fig. 3B is a cross-sectional view of the cutting head assembly in Fig. 3A;
Fig. 4 is a magnified front view of the cutting head assembly in Fig. 3A;
Fig. 5 is an exploded front view of the cutting head assembly in Fig. 3A and Fig. 4;
Fig. 6A is a bottom view of the cutting head assembly in Fig. 3A and Fig. 4;
Fig. 6B is a top view of the cutting head assembly in Fig. 3A and Fig. 4;
Fig. 6C is a top view of the cutting head assembly in Fig. 3A and Fig. 4 without an enclosure; and
Fig. 6D is a top view of the cutting head assembly in Fig. 3A and Fig. 4 showing trimmer line extending from an outer surface of an enclosure.

### DETAILED DESCRIPTION OF THE PREFERRED EMBODIMENTS

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

Terms such as "horizontal", "vertical", "upwards", "downwards", "above", "below" and similar terms as used herein are for the purpose of describing the invention in its normal in-use orientation and are not intended to limit the invention to any particular orientation.

Some example embodiments described provide a cutting head assembly that reduces noises and power loss during operation of a power tool that uses trimmer line, and allows for enhanced release of the trimmer line.

In particular, some example embodiments provide a cutting head assembly that includes a spool and an enclosure combined to define a spool cavity arranged to accommodate a trimmer line wound on the spool. The cutting head assembly is characterized in that the trimmer line is arranged to form a single layer of winding when being retracted within the enclosure, permitting minimal welding and/or tangling of the trimmer line and enhanced release, thereby optimizing efficiency.

Further example embodiments provide a power tool including a cutting head assembly as described in the example embodiments and a motor arranged to drive the cutting head assembly, and a string trimmer head including a cutting head assembly as described in the example embodiments and a trimmer line wound on the spool.

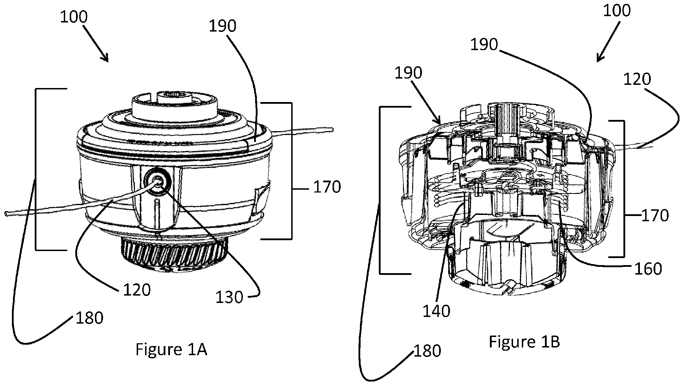

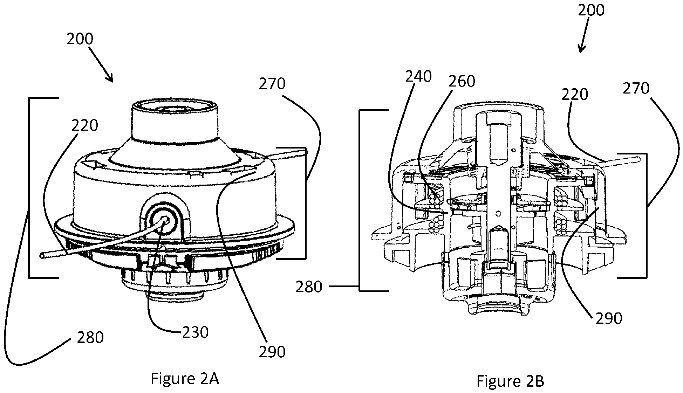

With reference to Fig. 1A-Fig. 1B and Fig. 2A-Fig. 2B, there is shown example embodiments of a cutting head assembly 100, 200 that may be configured in accordance with an example embodiment. The cutting head assembly 100 may include a spool 140, 240 and an enclosure 180, 280 combined to define a spool cavity arranged to accommodate a trimmer line 120, 220 wound on the spool 140, 240. The enclosure 180, 280 may have a spool portion 170, 270 that defines the outer surface and a height of the spool portion 170, 270, wherein the spool 140, 240 is housed substantially within the spool portion 170, 270. The trimmer line 120, 220 is wound around the spool 140, 240 to form a layer or layers of winding 160, 260 when being retracted within the enclosure 180, 280. Trimmer line 120, 220 is released from being wound 160, 260 around the spool 140, 240 through orifices or holes 130, 230 on an outer surface 190, 290 of the enclosure 180, 280 and extends from the outer surface 190, 290 of the enclosure 180, 280 thereby defining a cutting diameter of the trimmer line 120, 220 executed by centrifugal force.

In this embodiment, the spool portion 170, 270 of the enclosure 180, 280 may have spool stays to limit movement of the spool 140, 240 within the spool portion 170, 270.

The spool may include flanges that are substantially parallel to each other and the trimmer line 120, 220 may be wound onto the spool 140, 240 between these flanges, allowing for more trimmer line 120, 220 to be wound onto the spool 140, 240. Partition of the spool 140, 240 may enhance trimmer line flow

. During an example operation, two portions of the trimmer line 120, 220 may extend from the outer surface 190, 290 of the enclosure 180, 280, more preferably, the two portions of the trimmer line 120, 220 may extend from two opposite positions along the outer surface 190, 290.

In an alternative example embodiment, the cutting head assembly may include a second spool. For example, the second spool may be adjacent to the first spool 140, 240.Preferably, the spool 140, 240 may be annularly shaped.

The spool 140, 240 and the enclosure 180, 280 may be made of hard plastic or other rigid material for increased durability while remaining relatively lightweight during operational use.

The diameter of the cutting head assembly may be varied to suit different gardening requirements.

In an example embodiment, the cutting head assembly may include different size adapters for use with a variety of outdoor power tools.

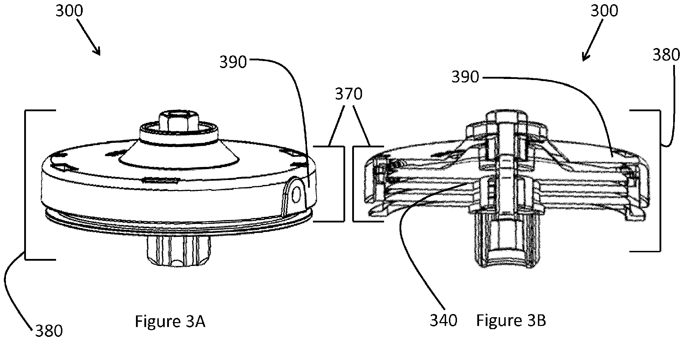

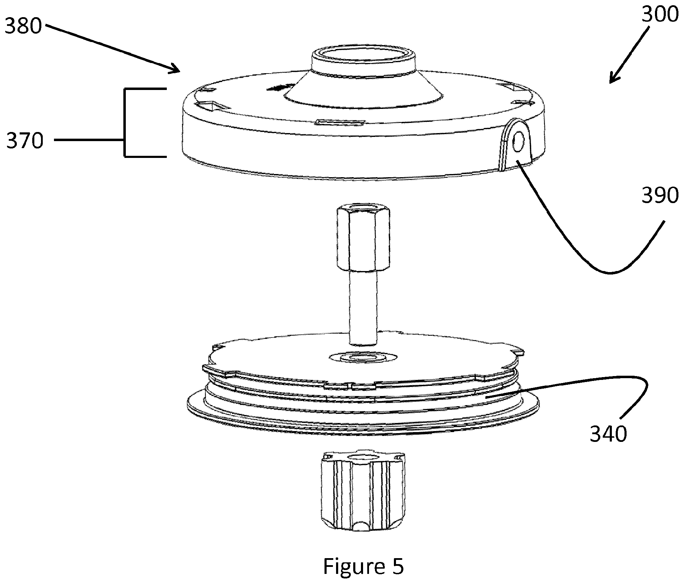

With reference to Figs. 3A, 3B, 4 and 5, there is provided a cutting head assembly in accordance with a preferred embodiment. In this embodiment, the cutting head assembly 300 includes a spool 340 and an enclosure 380 which are combined to define a spool cavity that houses a trimmer line (not shown) wound on a spool 340. The cutting head assembly 300 is characterized in that the trimmer line forms a single layer of winding (not shown) when being retracted within the enclosure 380. Preferably, the single layer of winding can reduce the incidence of welded or tangled trimmer lines and result in enhanced release of the trimmer line from the enclosure 380, and improved trimmer line feed out.

The enclosure 380 may further include spool portion 370 that defines an outer surface and a height of the spool portion 370. Preferably, the spool 340 is housed substantially within the spool portion 370.

The weight of the cutting head assembly 300 can have a considerable influence on the overall weight of a power tool. Generally, lightweight power tools are preferred by operators for their ease of handling and maneuverability, and because less manual exertion is required during operation.

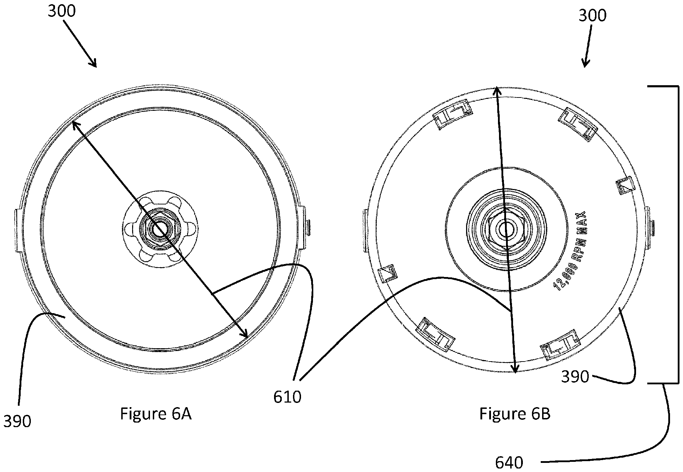

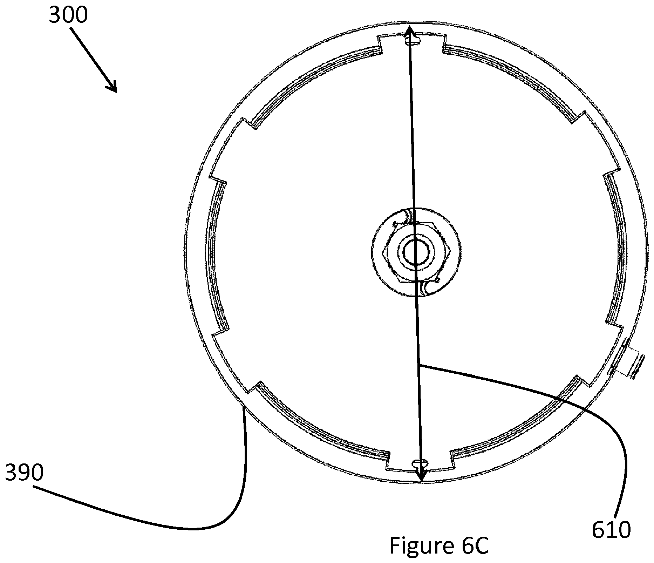

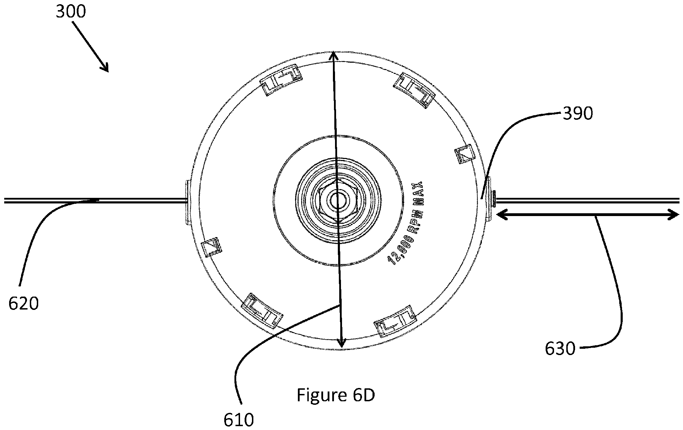

Figs. 6A, 6B, 6C and 6D provide different views of a preferred embodiment of a cutting head assembly 300 as described in Figs 3A, 3B, 4 and 5. Fig. 6A provides a bottom view, Fig. 6B provides a top view, Fig. 6C provides a top view without an enclosure, and Fig. 6D provides a top view with a trimmer line 620 extending from an outer surface of the enclosure 390. With reference to Fig. 6A-6D, during operation of the cutting head assembly 300, a portion of the trimmer line 620 extends from the outer surface of the enclosure 390, thereby defining a cutting diameter 630 larger than a cutting head diameter 610 defined by the circumference of the enclosure 640.

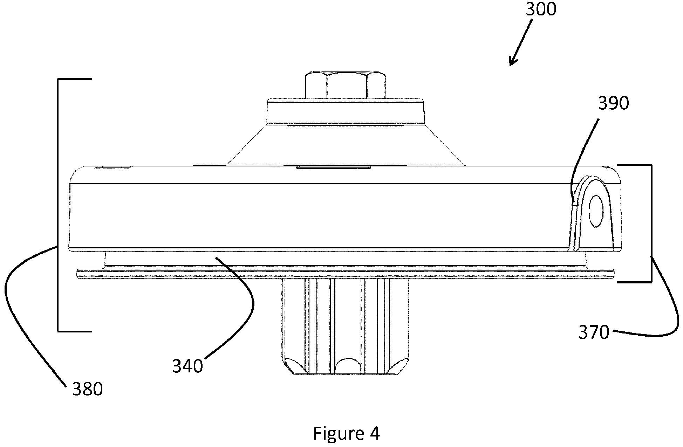

Preferably, as the trimmer line forms only a single layer of winding around the spool, the height of the spool may be further reduced or minimized. With reference to Fig. 4, in a preferred embodiment the spool portion 370 has a height that is less than or equal to 25.5 mm. A reduced height of the spool portion 370 can contribute to making the cutting edge assembly more lightweight and user friendly.

Preferably, the cutting head diameter is larger than or equal to 127 mm. More preferably, a ratio of the cutting head diameter 610 to the height of the spool portion 370 is larger than or equal to 4.98.

For example, the cutting diameter 630 may be larger than or equal to 330 millimeters (mm), and the ratio of the cutting diameter 630 to the cutting head diameter is larger than 0.37. As appreciated by a person skilled in the art, these dimensions/ratios may be varied in some alternative embodiments according to different design requirements of the trimmer head.

In this preferred embodiment, a larger cutting head diameter allows for a larger cutting diameter 630, as the single layer of trimmer line may be retracted within the enclosure and wound approximate to the circumference of the trimmer head enclosure when accommodated in the spool cavity defined by the spool and the enclosure.

Advantageously, a larger cutting diameter 630 can lead to longer periods of continuous cutting and the trimmer line 620 in the cutting head assembly 300 will not need to be replaced as frequently as with a shorter cutting diameter. A larger cutting diameter also allows for cutting of a larger surface area of garden or vegetation each time.

Advantageously, these factors provide a more efficient and user-friendly cutting head assembly 300 with enhanced trimming capacity and enhanced trimmer line release. The reduced height of the spool portion 370 and the larger cutting head diameter 610 also improves the aerodynamic qualities of the cutting head assembly 300 to facilitate reduced noise, power loss and vibration of the cutting head assembly 300.

The inventors performed experiments for evaluating the lightweight slimmer cutting head assembly 300 in accordance with embodiments of the present invention. The cutting head assembly 300 achieved an increased speed of 6334 rotations per minute (RPM). This is a significant increase over other models which averaged at 6320 RPM. The cutting head assembly 300 was also more energy efficient, using almost less than half the power of other models, i.e. 11.1 Amps (A) in comparison to 21.5 A in other models. There was also almost a 50% reduction in overall weight of the cutting head assembly 300 and considerable reductions in noise and vibration of the cutting head assembly 300.

Preferably, the cutting head assembly, when installed with a trimmer string or trimmer line, may be used with a power tool such as a string trimmer and/or a string edger. In this example, the power tool may also include an electric motor arranged to drive the trimmer head thereby allowing the user to use the trimmer to perform lawn trimming or edging operations.

The above embodiments may be advantageous in that the improved features of the cutting head assembly provide a more efficient, user friendly and effective string trimmer. Structural modifications to the cutting head assembly 300, including a larger cutting head diameter 610 and a reduced height spool portion 370 that accommodates a single layer of winding, provide the string trimmer with a large cutting diameter 620 and a high number of rotations achieved per minute coupled with lower power usage. A larger cutting diameter 620 can lead to longer periods of continuous cutting and less frequent replacements of the trimmer line. The larger cutting diameter 620 also allows for cutting of a larger surface area of garden or vegetation each time. The single layer of winding can minimize welding and tangling of the trimmer line, which can be a laborious and time-consuming nuisance for string trimmer operators.

In addition, the string trimmer head includes an improved trimmer string feed out mechanism which also enhances release of the trimmer line with reduced tangling and welding, making it more effective and efficient at cutting. The improved cutting head assembly 300 also significantly enhances the operability and user friendliness of the string trimmer by reducing the overall weight, noise generation and vibration of the cutting head assembly and handle of the string trimmer.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

It is to be understood that, if any prior art publication is referred to herein, such reference does not constitute an admission that the publication forms a part of the common general knowledge in the art.

Skilled persons will appreciate that other types of protection means rather than the above two may also be used in the hedge trimmers without departing from the spirit of the present invention.

## Claims

1. A cutting head assembly comprising a spool and an enclosure combined to define a spool cavity arranged to accommodate a trimmer line wound on the spool, **characterized in that**: the trimmer line is arranged to form a single layer of winding when being retracted within the enclosure.

2. The cutting head assembly in accordance with Claim 1, wherein during an operation of the cutting head assembly, a portion of the trimmer line extends from an outer surface of the enclosure, thereby defining a cutting diameter larger than a cutting head diameter defined by the circumference of the enclosure.

3. The cutting head assembly in accordance with Claim 2, wherein a ratio of the cutting diameter to the cutting head diameter is larger than 0.37.

4. The cutting head assembly in accordance with Claim 2 or 3, wherein the cutting diameter is larger than or equal to 330 mm.

5. The cutting head assembly in accordance with any one of Claims 2 to 4, wherein the cutting head diameter is larger than or equal to 127 mm.

6. The cutting head assembly in accordance with any one of Claims 2 to 5, wherein the enclosure includes a spool portion defining the outer surface and a height of the spool portion, wherein the spool is housed substantially within the spool portion.

7. The cutting head assembly in accordance with Claim 6, wherein a ratio of the cutting head diameter to the height of the spool portion is larger than or equal to 4.98.

8. The cutting head assembly in accordance with Claim 6 or 7, wherein the height is smaller than or equal to 25.5 mm

9. The cutting head assembly in accordance with any one of Claims 2 to 8, wherein two portions of the trimmer line extends from the outer surface of the enclosure at opposite positions along the outer surface.

10. A power tool comprising a cutting head assembly in accordance with any one of Claims 1 to 9, and a motor arranged to drive the cutting head assembly.

11. The power tool in accordance with Claim 10, wherein the power tool include a string trimmer and/or a string edger.

12. The power tool in accordance with Claim 10 or 11, wherein the motor is powered by electricity.

13. A string trimmer head comprising a cutting head assembly in accordance with any one of Claims 1 to 9, and the trimmer line wound on the spool.
